(19) Europäisches Patentamt
European Patent Office
Office européen des brevets

(11) **EP 4 120 005 A1**

(12) **EUROPEAN PATENT APPLICATION**
published in accordance with Art. 153(4) EPC

(43) Date of publication:
**18.01.2023 Bulletin 2023/03**

(21) Application number: **21767513.1**

(22) Date of filing: **12.03.2021**

(51) International Patent Classification (IPC):
**G02B 27/02** (2006.01)          **G02B 5/00** (2006.01)
**G02B 5/18** (2006.01)          **G02B 6/00** (2006.01)
**H04N 5/64** (2006.01)

(52) Cooperative Patent Classification (CPC):
**G02B 5/00; G02B 5/18; G02B 6/00; G02B 27/02;
H04N 5/64**

(86) International application number:
**PCT/JP2021/009973**

(87) International publication number:
**WO 2021/182598 (16.09.2021 Gazette 2021/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.03.2020  JP 2020044442
28.05.2020  JP 2020093092**

(71) Applicant: **Mitsubishi Chemical Corporation
Chiyoda-ku
Tokyo 100-8251 (JP)**

(72) Inventors:
• **KOSHITOUGE Haruki
Tokyo 100-8251 (JP)**

• **UMEDA Kazunori
Tokyo 100-8251 (JP)**
• **IWASO Kazuhisa
Tokyo 100-8251 (JP)**
• **OGURI Ayaka
Tokyo 100-8251 (JP)**
• **ONO Masahiko
Tokyo 100-8251 (JP)**
• **KATO Yukio
Tokyo 100-8251 (JP)**
• **SUGIHARA Masaki
Tokyo 100-8251 (JP)**
• **SHIMIZU Kouji
Tokyo 100-8251 (JP)**

(74) Representative: **Hoffmann Eitle
Patent- und Rechtsanwälte PartmbB
Arabellastraße 30
81925 München (DE)**

(54) **LIGHT-GUIDING PLATE AND AR DISPLAY**

(57) A light-guiding plate includes a resin base having a parallelism P of 5 $\mu$m or less per an area of $50 \times 100$ mm$^2$.

FIG. 1

EP 4 120 005 A1

**Description**

[Technical Field]

The present invention relates to a light-guiding plate and an AR display using the light-guiding plate.
Priority is claimed on Japanese Patent Application No. 2020-044442, filed March 13, 2020 and Japanese Patent Application No. 2020-093092 filed May 28, 2020, the contents of which are incorporated herein by reference.

[Background Art]

In the display device, an image display light-guiding plate may be used. For example, in a display device using virtual reality (VR) technique, augmented reality (AR) technique, or mixed reality (MR), an image display light-guiding plate in which a hologram layer is supported by a transparent base, or an image display light-guiding plate composed of a transparent base having a diffractive optical pattern having an uneven shape is used. Holograms having various optical functions, such as waveguide, reflection and diffraction functions, are formed on the hologram layer.
As the transparent base, a glass base is often used. However, from the viewpoint of processability, light weight, durability, and portability, it is more preferable to use a resin base as the transparent base.
Patent Document 1 discloses a hologram laminate used for an in-vehicle head-up display. In the hologram laminate, an acrylic-based resin substrate, an acrylic-based adhesive layer, a hologram layer made of an acrylic-based photopolymer, an acrylic-based adhesive layer, and an acrylic-based resin substrate are laminated in this order.
Patent Document 1 describes that the appearance of the hologram changes due to the surface smoothness of the acrylic-based resin substrate. According to Patent Document 1, when the maximum height Rmax representing the surface smoothness of the hologram laminate is greater than 50 $\mu$m, the appearance change of the hologram is remarkable. When the maximum height Rmax is less than 25 $\mu$m, the change in appearance of the hologram is acceptable. However, Patent Document 1 does not particularly describe the necessity of nano-order surface smoothness having a maximum height Rmax of 1 $\mu$m or less. Patent Document 1 does not describe any specific example having the nano-order surface smoothness.
Patent Document 2 describes an optical device. The optical device has a first light guide body that includes a first light incident portion and a first light emitting portion; a first diffractive optical element that is provided in the first light incident portion of the first light guide body and that diffracts a part of the incident light toward the inside of the first light guide body to guide the light to the inside of the first light guide body through reflection; and a reflective member that is provided on a surface of the first light guide body opposite to the first light incident portion. The reflective member is disposed to perform light guide to the inside of the first light guide body through reflection by reflecting at least a part of the incident light that is not diffracted by the first diffractive optical element through the reflective member and then diffracting the light through the first diffractive optical element (Claim 1).

[Citation List]

[Patent Documents]

[Patent Document 1] Japanese Unexamined Patent Application, First Publication No. 2000-296583
[Patent Document 2] Japanese Patent No. 6232863

[Summary of Invention]

[Technical Problem]

However, the above-mentioned related art has the following problems.
The hologram laminate described in Patent Document 1 is mainly used for an in-vehicle head-up display viewed by a driver. Therefore, the image quality of the display image does not have to be particularly high. However, for example, in the case of a wearable display or a head-mounted display used for AR or MR, a realistic image is often displayed or fine characters are displayed in the entire field of view of the user. In such applications, higher image quality is required.
According to the study of the present inventor, when the hologram layer is sandwiched between the resin bases in the image display light-guiding plate, deterioration in image quality may be observed even when the maximum height Rmax is less than 25 $\mu$m. For example, when swelling (gear mark) of a pitch corresponding to the meshing pitch of the drive gear of the extrusion roller is generated on the surface of the extruded resin base, a portion where the image is unclear is likely to occur.

Further, in the optical device described in Patent Document 2, the light guide body is a plate-shaped member (light-guiding plate) formed of glass or a light transmissive resin material. Glass is inferior in weight, impact resistance, and safety, compared with resin materials. On the other hand, the resin material is inferior in dimensional accuracy, optical characteristics, and yellowing due to dimensional changes due to water absorption and heating, compared with glass. Therefore, when the light-guiding plate described in Patent Document 2 is formed of a resin material, there is room for improvement in visibility.

The present invention has been made in view of the above-mentioned problems, and an object of the present invention is to provide a resin-made image display light-guiding plate, which is able to display a clear image and has excellent visibility.

[Solution to Problem]

As a result of diligent research, the present inventor has found that the above-mentioned problems can be solved by using a resin base molded into a specific shape as a light-guiding plate, and has reached the present invention.
In order to solve the above-mentioned problems, for example, the present invention has the following aspects.

[1] A light-guiding plate including a resin base in which the resin base has a parallelism P of 5 $\mu$m or less per an area of 50 × 100 mm$^2$, preferably 0.2 $\mu$m or greater and 4 $\mu$m or less, more preferably 0.2 $\mu$m or greater and 3 $\mu$m or less, yet more preferably 0.2 $\mu$m or greater and 1.2 $\mu$m or less, especially preferably 0.2 $\mu$m or greater and 1.0 $\mu$m or less, and most preferably 0.2 $\mu$m or greater and 0.8 $\mu$m or less.

[2] The light-guiding plate according to [1], in which a rate of dimensional change due to moisture absorption measured based on JIS K7209: 2000 is 1.0% or less, more preferably 0.01 % or greater and 1.0% or less, yet more preferably 0.02% or greater and 0.9% or less, and especially preferably 0.03% or greater and 0.8% or less.

[3] The light-guiding plate according to [1] or [2], in which a rate of heat shrinkage measured based on JIS K6718-1 Annex A is 3% or less, more preferably 0% or greater and 2.5% or less, and yet more preferably 0% or greater and 2.0% or less.

[4] The light-guiding plate according to any one of [1] to [3], in which a thickness of the resin base is 0.05 mm or greater and 2 mm or less, more preferably 0.1 mm or greater and 1.5 mm or less, and yet more preferably 0.5 mm or greater and 1 mm or less.

[5] The light-guiding plate according to any one of [1] to [4], in which an arithmetic average roughness Ra of a surface of the resin base is 10 nm or less, more preferably 0.1 nm or greater and 8 nm or less, yet more preferably 0.5 nm or greater and 5 nm or less, and especially preferably 1 nm or greater and 5 nm or less.

[6] The light-guiding plate according to any one of [1] to [5], in which a refractive index of the resin base is 1.48 or greater, preferably 1.48 or greater and 2.00 or less, more preferably 1.48 or greater and 1.90 or less, and yet more preferably 1.48 or greater and 1.80 or less.

[7] The light-guiding plate according to any one of [1] to [6], in which the resin base includes at least one resin selected from the group consisting of poly (meth) acrylic resin, epoxy resin, cyclic polyolefin, and polycarbonate.

[8] The light-guiding plate according to any one of [1] to [7], in which at least one surface of the resin base has a barrier layer or a hard coat layer.

[9] The light-guiding plate according to any one of [1] to [8], in which the resin base has a diffractive optical pattern on at least one surface, and a maximum height of the diffractive optical pattern is preferably 0.05 mm or greater and 0.15 $\mu$m or less, more preferably 0.1 mm or greater and 0.14 $\mu$m or less, yet more preferably 0.5 mm or greater and 0.13 $\mu$m or less.

[10] The light-guiding plate according to any one of [1] to [9], in which a flatness of the light-guiding plate is preferably 0.5 $\mu$m or greater and 500 $\mu$m or less, more preferably 0.6 $\mu$m or greater and 450 $\mu$m or less, and yet more preferably 0.7 $\mu$m or greater and 400 $\mu$m or less.

[11] The light-guiding plate according to any one of [1] to [10], in which a glass transition temperature (Tg) of the resin base is preferably 50°C or greater and 200°C or less, more preferably 60°C or greater and 190°C or less, and yet more preferably 70°C or greater and 180°C or less.

[12] The light-guiding plate according to any one of [1] to [11], in which a Charpy impact strength of the resin base is preferably 0.5 or greater and 15 kJ/m$^2$ or less, more preferably 0.8 or greater and 14.5 kJ/m$^2$ or less, and yet more preferably 1.0 or greater and 14.0 kJ/m$^2$ or less.

[13] The light-guiding plate according to any one of [1] to [12], in which a specific gravity of the resin base is preferably 1.0 or greater and 1.5 g/cm$^3$ or less, more preferably 1.05 or greater and 1.45 g/cm$^3$ or less, and yet more preferably 1.1 or greater and 1.4 g/cm$^3$ or less.

[14] The light-guiding plate according to any one of [1] to [13], in which a light transmittance of the resin base is preferably 85% or greater and 100% or less, more preferably 86% or greater and 100% or less, and yet more preferably 87% or greater and 100% or less.

[15] The light-guiding plate according to any one of [1] to [14], in which a yellowness (YI) of the resin base is preferably 0 or greater and 5 or less, more preferably 0 or greater and 4 or less, and yet more preferably 0 or greater and 3 or less.

[16] The light-guiding plate according to any one of [1] to [15], in which a refractive index of the resin base is preferably 1.2 or greater and 2.0 or less, more preferably 1.3 or greater and 1.9 or less, and yet more preferably 1.4 or greater and 1.8 or less.

[17] The light-guiding plate according to [1] to [16], in which a retardation is preferably 1 or greater and 200 nm or less, more preferably 3 or greater and 150 nm or less, and yet more preferably 4 or greater and 100 nm or less.

[18] An AR image display light-guiding plate including the light-guiding plate according to [1] to [17].

[19] A use of the light-guiding plate according to any one of [1] to [18] for displaying an AR image.

[20] An AR display including the light-guiding plate according to any one of [1] to [19].

[21] The AR display including the light-guiding plate according to [20], in which an image light incident surface has a diffractive optical pattern, and a line width ($L_{IN}$) of the diffractive optical pattern on the image light incident surface is preferably 100 or greater and 300 nm or less, more preferably 120 or greater and 280 nm or less, and yet more preferably 140 or greater and 260 nm or less.

[22] The AR display including the light-guiding plate according to [20] or [21], in which an image light incident surface has a diffractive optical pattern, and a height ($H_{IN}$) of the diffractive optical pattern on the image light incident surface is preferably 30 or greater and 150 nm or less, more preferably 40 or greater and 140 nm or less, and yet more preferably 50 or greater and 130 nm or less.

[23] The AR display including the light-guiding plate according to any one of [20] to [22], in which an image light incident surface has a diffractive optical pattern, and a value of the ratio of the height ($H_{IN}$) to the line width ($L_{IN}$) of the diffractive optical pattern on the image light incident surface (height ($H_{IN}$) / line width ($L_{IN}$)) is preferably 0.1 or greater and 1.5 or less, more preferably 0.14 or greater and 1.17 or less, and yet more preferably 0.19 or greater and 0.93 or less.

[24] The AR display including the light-guiding plate according to any one of [20] to [23], in which an image light emission surface has a diffractive optical pattern, and a line width ($L_{OUT}$) of the diffractive optical pattern on the image light emission surface is preferably 50 or greater and 250 nm or less, more preferably 70 or greater and 230 nm or less, and yet more preferably 90 or greater and 210 nm or less.

[25] The AR display including the light-guiding plate according to any one of [20] to [24], in which an image light emission surface has a diffractive optical pattern, and a height ($H_{OUT}$) of the diffractive optical pattern on the image light emission surface is preferably 30 or greater and 150 nm or less, more preferably 40 or greater and 140 nm or less, and yet more preferably 50 or greater and 130 nm or less.

[26] The AR display including the light-guiding plate according to any one of [20] to [25], in which an image light emission surface has a diffractive optical pattern, and a value of the ratio of the height to the line width of the diffractive optical pattern on the image light emission surface (height ($H_{OUT}$) / line width ($L_{OUT}$)) is preferably 0.12 or greater and 3.0 or less, more preferably 0.28 or greater and 2.00 or less, and yet more preferably 0.24 or greater and 1.44 or less.

[Advantageous Effects of Invention]

According to the present invention, it is possible to provide an image display light-guiding plate made of resin, which is able to display a clear image and has excellent visibility.

[Brief Description of Drawings]

Fig. 1 is a cross-sectional view of a main part representing an example of a light-guiding plate of the present invention.
Fig. 2 is a cross-sectional view representing another example of the light-guiding plate of the present invention.
Fig. 3 is a plan view of an example of the light-guiding plate of the present invention.
Fig. 4 is a schematic view representing a part of an incident light side relief type diffractive element forming pattern of a metal mold for injection molding used in the example.
Fig. 5 is a schematic view representing a part of an emitted light side relief type diffractive element forming pattern of the metal mold for injection molding used in the example.

[Description of Embodiments]

The resin base used for the light-guiding plate of the present invention has a parallelism P of 5 $\mu$m or less per

an area of 50 × 100 mm$^2$.

The resin base is preferably a flat plate. The flat plate may or may not have irregularities on the surface thereof. When the flat plate has irregularities on the surface, a depth of the concave portion and a height of the convex portion are preferably 30 or greater and 150 nm or less, more preferably 40 or greater and 140 nm or less, and yet more preferably 50 or greater and 130 nm or less.

The parallelism P is a value obtained as a product of the number of interference fringes per an area of 50 × 100 mm$^2$ of the measurement surface (upper surface or lower surface) of the resin base measured by a laser interferometer and the amount of change Δd in the thickness per one interference fringe. Regarding the number of interference fringes, the number of interference fringes is defined as an average value of the numbers of interference fringes which are counted in four directions from the center of the molded product to the upper, lower, left, and right ends of the molded product, on the basis of the interference image measured by the laser interferometer. The Δd can be calculated by Expression (1).

Here, n is a refractive index of the resin base, and λ is 632.8 nm (a wavelength of the He-Ne laser). The refractive index of the resin base is a value obtained by measuring with a D line of 589 nm at 23°C based on JIS K7142 using an Abbe refractometer.

When the area of the resin base to be measured is less than 50 × 100 mm$^2$, the number of interference fringes is converted into an area value per 50 × 100 mm$^2$ to obtain the parallelism P.

$$\Delta d = \frac{\lambda}{2n} \qquad \cdots \ (1)$$

The value of the parallelism P means a frequency of the thickness change at a level that can affect the characteristics of the light-guiding plate, and can be rephrased as a degree of thickness change. It can be determined that the smaller the value is, the more parallel the upper surface and the lower surface of the resin base are, and the higher the accuracy of the thickness of the resin base is.

That is, by setting the parallelism P of the resin base to 5 μm or less, it is possible to clearly display an image passing through the light-guiding plate using the resin base. The parallelism P is preferably 4 μm or less, more preferably 3 μm or less, yet more preferably 1.2 μm or less, especially preferably 1.0 μm or less, and most preferably 0.8 μm or less.

On the other hand, since it is possible to suppress deterioration and variation in quality of the light-guiding plate due to deterioration of parallelism P due to deformation during handling of the resin base and adhesion of foreign matter, the parallelism P of the resin base is preferably set to 0.2 μm or greater.

In the light-guiding plate of the present invention, the rate of moisture absorption is preferably in the range of 0.01% or greater and 1.0% or less. It is more preferably in the range of 0.02% or greater and 0.9% or less, and yet more preferably in the range of 0.03% or greater and 0.8% or less.

Further, in the light-guiding plate of the present invention, the rate of dimensional change due to moisture absorption is preferably 1.0% or less. It is more preferably in the range of 0.01% or greater and 1.0% or less, yet more preferably in the range of 0.02% or greater and 0.9% or less, and especially preferably in the range of 0.03% or greater and 0.8% or less.

When the rate of dimensional change due to moisture absorption is 1.0% or less, the dimensional accuracy of the light-guiding plate of the present invention is more excellent, and there is a tendency that changes over time in the image display characteristics of the light-guiding plate can be suppressed. The rate is more preferably 0.9% or less, and especially preferably 0.8% or less.

Further, by setting the rate of dimensional change due to moisture absorption to 0.01% or greater, it is not necessary to excessively process the light-guiding plate of the present invention. Therefore, the productivity can be improved. The rate is more preferably 0.02% or greater, and especially preferably 0.03% or greater.

The rate of moisture absorption of the light-guiding plate of the present invention, which is also a light transmissive resin material, is a value obtained by immersing the test piece in distilled water at 23°C and calculating the rate of weight increase per 24 hours due to water absorption, based on JIS K 7209: 2000.

Further, the rate of dimensional change due to moisture absorption of the light-guiding plate of the present invention, which is also a light transmissive resin material, is a value calculated by immersing the test piece in distilled water at 23°C and dividing the rate of weight increase per 24 hours due to water absorption by the specific gravity of the resin material, based on JIS K 7209: 2000.

Further, in the light-guiding plate of the present invention, the rate of heat shrinkage measured based on Annex A of JIS K 6718-1: 2015 is preferably 3% or less. Thereby, the sharpness of the display image using the hologram such as AR or MR formed by using the light-guiding plate tends to be improved. The rate of heat shrinkage is more preferably 2.5% or less, and yet more preferably 2.0% or less.

In the image display light-guiding plate of the present invention, it is preferable that the arithmetic average roughness Ra of the surface of the resin base is 10 nm or less. Thereby, the sharpness of the displayed image formed by using the light-guiding plate tends to be improved. The sharpness is more preferably 8 nm or less, and yet more preferably 5 nm or less.

Further, in the image display light-guiding plate of the present invention, the arithmetic average roughness Ra of the surface of the resin base is preferably 0.1 nm or greater. Thereby, there is a tendency to suppress deterioration and variation in quality of the light-guiding plate due to deterioration of parallelism P due to deformation during handling of the resin base and adhesion of foreign matter. The arithmetic average roughness Ra is more preferably 0.5 nm or greater, and yet more preferably 1 nm or greater.

In the image display light-guiding plate of the present invention, the refractive index of the resin base is preferably 1.20 or greater. Thereby, there is a tendency to improve visibility when used as an image display light-guiding plate. The refractive index is more preferably 1.30 or greater, and yet more preferably 1.40 or greater. Further, from the viewpoint that the viewing angle can be expanded, the refractive index of the resin base is preferably 1.48 or greater. More preferably, the refractive index is 1.49 or greater.

The refractive index of the resin base is a value obtained by performing measurement at the D line of 589 nm at 23°C based on JIS K7142 using an Abbe refractometer.

Further, in the image display light-guiding plate of the present invention, the refractive index of the resin base is preferably 2.00 or less. Thereby, the resin base can be handled with a thickness at which it is easy to process as an image display light-guiding plate without making the resin base extremely thin. The thickness is more preferably 1.90 or less, and yet more preferably 1.80 or less.

In the image display light-guiding plate of the present invention, a light transmissive resin material can be used as the material that can be used for the resin base. Examples of materials include polyethylene terephthalate, polyethylene naphthalate, polyether sulfone, polyimide, nylon, polystyrene, polyvinyl alcohol, ethylene vinyl alcohol copolymer, fluoro resin film, polyvinyl chloride, polyethylene, polypropylene, cyclic polyolefin, cellulose, acetyl cellulose, polyvinylidene chloride, aramid, polyphenylene sulfide, polyurethane, polycarbonate, poly(meth)acrylic resin, phenol resin, epoxy resin, polyarylate, polynorbornene, styrene-isobutylene-styrene block copolymer (SIBS), and organic materials such as allyl diglycol carbonate. It is preferable that the material includes at least one resin selected from the group consisting of poly(meth)acrylic resin, epoxy resin, cyclic polyolefin, and polycarbonate.

These resin materials can be obtained by polymerizing a polymerizable material by a known method. It is preferable that the polymerizable material includes a monomer, a polymerization initiator, an emulsifier, and the like. In the case of poly (meth) acrylic resin, examples of the monomer include (meth) acrylic acid esters, aliphatic methacrylates (for example, methyl methacrylate, ethyl methacrylate, butyl methacrylate), and alicyclic methacrylates (for example, cyclohexyl methacrylate), aromatic methacrylate (for example, phenyl methacrylate), and the like. Examples of the polymerization initiator include an azo polymerization initiator, an organic peroxide, and the like. Examples of the azo polymerization initiator include 2,2'-azobis-(2,4-dimethylvaleronitrile), and the like. Examples of the organic peroxide include t-hexyl peroxypivalate, and the like. Examples of the emulsifier include sodium dioctylsulfosuccinate, and the like.

From the viewpoint of transparency of the resin base, it is preferable to use polycarbonate or poly(meth)acrylic resin. From the viewpoint of process resistance such as chemical resistance and processability of the resin base, it is preferable to use a poly(meth)acrylic resin, an epoxy resin, or a cyclic polyolefin. However, it is more preferable to use a poly(meth)acrylic resin since both transparency and process resistance can be achieved.

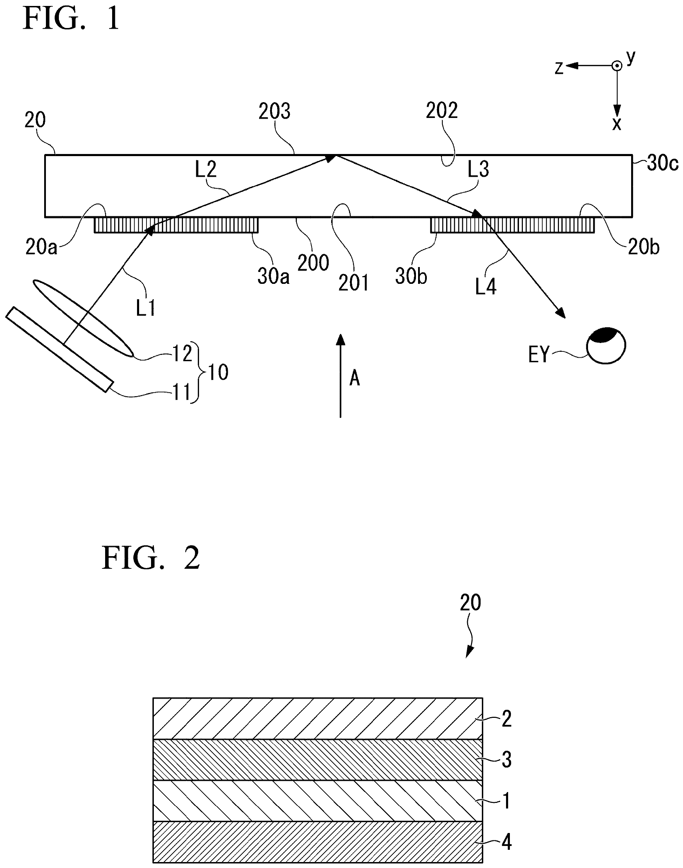

When the hologram layer is employed for the light-guiding plate of the present invention, a barrier layer can be adopted between the resin base and the hologram layer. By employing the barrier layer, deterioration of the hologram layer can be suppressed and a clear image can be maintained. Further, in the light-guiding plate of the present invention, a hard coat layer can be adopted into the resin base. By adopting the hard coat layer, it is possible to suppress scratches on a surface of the resin base and maintain a clear image. Either or both of these barrier layers and hard coat layers may be used. Fig. 2 shows a cross-sectional view of a light-guiding plate that has a barrier layer and a hard coat layer. In Fig. 2, a barrier layer 3 is provided between the resin base 1 and the hologram layer 2, and a hard coat layer 4 is provided on a surface of the resin base 1 opposite to a surface on the barrier layer 3 side.

Examples of the material of the barrier layer include silicon oxide, silicon nitrogen oxide, DLC, aluminum oxide, and glass. In addition, the material may be an oxide such as zinc oxide, antimony oxide, indium oxide, cerium oxide, calcium oxide, cadmium oxide, silver oxide, gold oxide, chromium oxide, silicon oxide, cobalt oxide, zirconium oxide, tin oxide, titanium oxide, iron oxide, copper oxide, nickel oxide, platinum oxide, palladium oxide, bismuth oxide, magnesium oxide, manganese oxide, molybdenum oxide, vanadium oxide, or barium oxide.

It is preferable that the barrier layer has a layer thickness in a range of 10 to 300 nm, and can be formed by a method such as a vacuum vapor deposition method, a sputtering method, an ion plating method, or a plasma CVD method.

Examples of the material of the hard coat layer include a hard coat agent including a polymerizable monomer or a polymerizable oligomer that forms a cured product by irradiation with active energy luminous flux. Examples of the polymerizable monomer include(meth)acrylate monomers having a radically polymerizable unsaturated group in the molecule. Examples of the polymerizable oligomer include(meth)acrylate oligomers having a radically polymerizable unsaturated group in the molecule.

It is preferable that the hard coat layer has a pencil hardness (JIS K 5600-5-4: 1999) of H or greater and a layer thickness in the range of 1 to 50 $\mu$m.

Further, the hard coat layer can be formed by irradiating a coating film with light. The coating film can be obtained by, for example, directly applying the above-mentioned hard coat agent on the resin base through a casting method, a roller coating method, a bar coating method, a spray coating method, an air knife coating method, a dipping method, or the like.

When the barrier layer or the hard coat layer is adopted on the surface of the resin base as described above, it is preferable that the parallelism P per 50 $\times$ 100 mm$^2$ is 5 $\mu$m or less even in the light-guiding plate.

The resin base having the above-mentioned parallelism P and excellent thickness accuracy can be manufactured, for example, by using a casting method. It can also be manufactured by performing post-processing such as cutting, polishing, and press molding on the resin base.

The post-processing such as cutting, polishing, and press molding described above can also be applied to the resin base into which a barrier layer and a hard coat layer have been adopted.

As the casting method, a glass casting method may be used. In the glass casting method, the raw material of the resin base is poured between the glass plates having a smooth surface, and then the polymerization process is performed to solidify the raw material of the resin. When the resin base is manufactured by the glass casting method, the surface shape of the glass used in the glass casting method (hereinafter, may be referred to as "casting glass") is transferred to the resin base.

In the casting glass, the smaller the internal strain, the more the parallelism P of the resin base tends to improve. For example, as the casting glass, non-tempered glass is preferable to tempered glass. However, even with tempered glass, when the chemically strengthened glass has less distortion than the glass which is tempered by cooling of air jet, the parallelism P of the resin base tends to be further improved.

The thicker the casting glass, the higher the rigidity of the casting glass, and the more the deformation of the glass during the production of the resin base is suppressed. Therefore, the parallelism P of the resin base can be improved.

The less deformable the casting glass is, the higher the rigidity of the casting glass is, and the deformation of the glass during the production of the resin base is suppressed. Therefore, the parallelism P of the resin base can be improved. For example, it is more preferable to use synthetic quartz glass than non-tempered glass.

In the polymerization process in the casting method, the lower the curing rate, the easier it is for the surface shape of the cast to be transferred to the resin base. Therefore, the flatness and smoothness of the resin base can be improved.

As the means for lowering the curing rate, for example, means such as achieving reduction in amount of the polymerization initiator or lowering the polymerization temperature may be used.

A release agent can be used for the cast, but the smaller the amount used, the more preferable. Thereby, the surface shape of the cast is easily transferred by the resin base, and the flatness and smoothness of the resin base can be improved.

In the polymerization process in the casting method, the flatness and smoothness of the resin base can be improved by pre-polymerizing the monomer for forming the base.

In the polymerization process in the casting method, the curing shrinkage is reduced by performing the cast polymerization using a raw material in which the polymer for forming the base is dissolved in the monomer for forming the base, and thus the surface shape of the cast is easily transferred to the resin base. Therefore, the flatness and smoothness of the resin base can be improved.

In the casting method, two or greater of the above-mentioned techniques may be used in combination. In such a case, the parallelism P of the resin base can be further improved by the synergistic effect of each technique.

Post-processing such as cutting, polishing, and press molding on the resin base can be performed by appropriately selecting a known technique or the like.

The thickness of the resin base is not particularly limited, but the thickness of the resin base is preferably 0.05 mm or greater and 2 mm or less.

When the thickness of the resin base is 0.05 mm or greater, this is preferable in that it is easy to maintain a stable shape, and the measurement error of the parallelism P tends to be suppressed to a small value. The thickness is more preferably 0.1 mm or greater, and yet more preferably 0.5 mm or greater.

Further, when the thickness of the resin base is 2 mm or less, this is preferable in that the mass of the image display light-guiding plate can be reduced, the weight can be reduced, and the deformation and residual strain due to water absorption of the resin base tend to be reduced. The thickness is more preferably 1.5 mm or less, and yet more preferably 1 mm or less.

The thickness of the resin base is a value obtained by measuring the thickness at four points with a micrometer at 23°C and calculating the average value thereof.

The thickness tolerance of the resin base is preferably ± 0 mm or greater and 0.2 mm or less, and preferably ± 0.001 mm or greater and 0.2 mm or less.

The light-guiding plate of the present invention may be provided with a diffractive optical pattern on at least one surface of a light transmissive resin base. Thereby, the light-guiding plate can be suitably used as an image display light-guiding plate in an AR display or the like.

For example, a light-guiding plate on which a relief type diffractive element is formed can be obtained by transferring and shaping a diffractive optical pattern optically designed on a metal mold on an image light incident surface and an image light emission surface on the surface of the resin base.

The diffractive optical pattern is not particularly limited. However, the maximum height of the diffractive optical pattern is preferably 0.15 $\mu$m or less. Thereby, the influence of the diffractive optical pattern on the parallelism P is reduced, and a clear image tends to be displayed. The maximum height is more preferably 0.14 $\mu$m or less, and yet more preferably 0.13 $\mu$m or less.

When the diffractive optical pattern is provided on the surface of the resin base as described above, it is preferable that the parallelism P per 50 × 100 mm$^2$ is 5 $\mu$m or less even in the light-guiding plate.

Hereinafter, an example of a light-guiding plate for AR display having a relief type diffractive element will be described, with reference to the drawings as appropriate.

Fig. 1 is a cross-sectional view of a main part representing an example of the light-guiding plate of the present invention. The light-guiding plate 20 shown in Fig. 1 has relief type diffractive elements (incident light side relief type diffractive element 30a, emitted light side relief type diffractive element 30b). The relief type diffractive elements are formed by transferring and shaping diffractive optical patterns optically designed on a metal mold on the image light incident surface 20a and the image light emission surface 20b of the surface 200 of the resin base 30c.

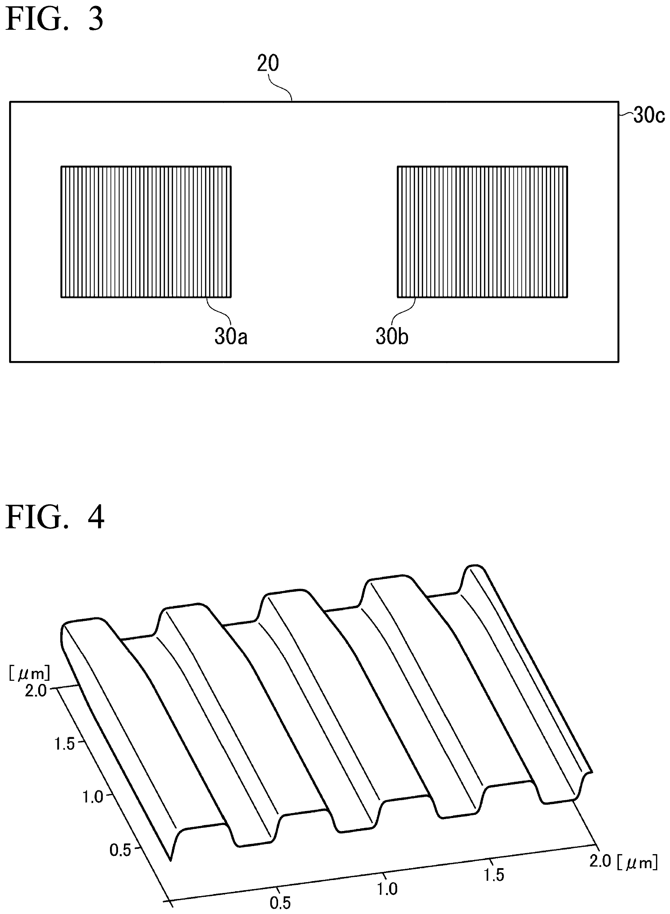

Fig. 3 is a plan view of the light-guiding plate 20 seen from the arrow A shown in Fig. 1.

The overall appearance of the light-guiding plate 20 shown in Figs. 1 and 3 is formed by a resin base 30c which is a flat plate-shaped member extending parallel to the YZ plane in the drawing. The light-guiding plate 20 is a plate-shaped member formed of a light transmissive resin material. The light-guiding plate 20 has a front surface 200 which is disposed opposite to the image forming unit 10, a first panel surface 201 which is the rear side of the surface 200, and a second panel surface 202 which is the rear side of a rear surface 203 and opposite to the first panel surface 201. With such a configuration, image light is incident through the image light incident surface 20a formed on the surface 200, and is guided onto the image light emission surface 20b through the first panel surface 201 and the second panel surface 202.

The image forming unit 10 shown in Fig. 1 includes an image display device 11 and a projection optical system 12. The image display device 11 is, for example, a liquid crystal display device, and generates light including three colors of red, green, and blue from a light source, diffuses the light from the light source to form a luminous flux having a rectangular cross-section, and emits the light toward the projection optical system 12. On the other hand, the projection optical system 12 is, for example, a collimating lens that converts image light emitted from each point on the image display device 11 into a luminous flux in a parallel state and causes the light to be incident onto the light-guiding plate 20.

The light-guiding plate 20 of the resin base 30c has an image light incident surface 20a which is a light incident portion that captures image light from the image forming unit 10, on a surface 200 parallel to the YZ plane, and an image light emission surface 20b that emits an image light toward the observer's eye EY. The incident light side relief type diffractive element 30a is formed on the image light incident surface 20a by transferring and shaping a diffractive optical pattern optically designed on the metal mold. The emitted light side relief type diffractive element 30b, which diffracts and transmits the image light emitted from the image light emission surface 20b toward the outside and projects the image light onto the observer's eye EY as imaginary light, is formed on the image light emission surface 20b by transferring and shaping a diffractive optical pattern optically designed on the metal mold.

In Fig. 1, the incident light side relief type diffractive element 30a and the emitted light side relief type diffractive element 30b have the same grating period as an example. However, the grating periods of the incident light side relief type diffractive element 30a and the emitted light side relief type diffractive element 30b may be different.

The light-guiding plate 20 of the resin base 30c has a first panel surface 201 and a second panel surface 202 facing each other and extending parallel to the YZ plane. Thereby, the image light diffracted by the incident light side relief type diffractive element 30a is totally reflected in the light-guiding plate 20 of the resin base 30c, and the image light diffracted by the incident light side relief type diffractive element 30a is guided in front of the observer's eyes. In other words, the light L1 emitted from the image forming unit 10 is incident on the image light incident surface 20a and diffracted by the incident light side relief type diffractive element 30a (light L2), and the light L2 is incident on the second panel surface 202 and totally reflected (light L3), and then the light L3 is incident on the first panel surface 201 and totally reflected. By repeating the operation thereafter, the image light is guided to the image light emission surface 20b of the light-guiding plate 20 of the resin base 30c. The image light guided to the image light emission surface 20b is diffracted by the relief type diffractive element 30b on the emitted light side, and then emitted toward the observer's eye EY (light L4).

It should be noted that the reflection coating does not have to be applied on the first panel surface 201 and the second panel surface 202. The external light, which is incident on the first panel surface 201 and the second panel surface 202 from the external side, may pass through the light-guiding plate 20 of the resin base 30c at a high transmittance. Thereby, the light-guiding plate 20 can be made into a see-through type capable of seeing through the external image.

The light-guiding plate 20 is a light-guiding plate for AR display having excellent visibility, which is formed of a light transmissive resin material.

The line width ($L_{IN}$) of the diffractive optical pattern of the image light incident surface 20a is preferably 100 nm or greater and 300 nm or less, more preferably 120 nm or greater and 280 nm or less, and yet more preferably 140 nm or greater and 260 nm or less.

The height ($H_{IN}$) of the diffractive optical pattern of the image light incident surface 20a is preferably 30 nm or greater and 150 nm or less, more preferably 40 nm or greater and 140 nm or less, and yet more preferably 50 nm or greater and 130 nm or less.

The value (height ($H_{IN}$) / line width ($L_{IN}$)) of the ratio of the height ($H_{IN}$) and the line width ($L_{IN}$) of the diffractive optical pattern of the image light incident surface 20a is preferably 0.1 or greater and 1.5 or less, more preferably 0.14 or greater and 1.17 or less, and yet more preferably 0.19 or greater and 0.93 or less.

When the line width ($L_{IN}$), height ($H_{IN}$) and height ($H_{IN}$) / line width ($L_{IN}$) of the diffractive grating pattern of the image light incident surface 20a are within the above-mentioned ranges, the angle of diffraction of the image light emitted from the image forming unit after passing through the image incident surface is within a predetermined range. Thus, the diffracted light propagates in the light-guiding plate by total reflection and is able to reach the image light emission surface.

The line width ($L_{IN}$) and height ($H_{IN}$) of the diffractive grating pattern of the image light incident surface 20a are values obtained by measuring with an atomic force microscope (Nano-R, manufactured by Pacific Nanotechnology corp.).

The value ($H_{IN}/L_{IN}$) of the ratio of the height ($H_{IN}$) and the line width ($L_{IN}$) of the diffractive grating pattern of the image light incident surface 20a is a value calculated from the height ($H_{IN}$) and the line width ($L_{IN}$) measured by the above-mentioned method.

The line width ($L_{OUT}$) of the diffractive optical pattern of the image light emission surface 20b is preferably 50 nm or greater and 250 nm or less, more preferably 70 nm or greater and 230 nm or less, and yet more preferably 90 nm or greater and 210 nm or less.

The height ($H_{OUT}$) of the diffractive optical pattern of the image light emission surface 20b is preferably 30 or greater and 150 nm or less, more preferably 40 or greater and 140 nm or less, and yet more preferably 50 or greater and 130 nm or less.

The value of the ratio of the height to the line width of the diffractive optical pattern of the image light emission surface 20b (height ($H_{OUT}$) / line width ($L_{OUT}$)) is preferably 0.12 or greater and 3.0 or less, more preferably 0.28 or greater and 2.00 or less, and yet more preferably 0.24 or greater and 1.44 or less.

When the line width ($L_{OUT}$), height ($H_{OUT}$) and height ($H_{OUT}$) / line width ($L_{OUT}$) of the diffractive grating pattern of the image light emission surface 20b are within the above-mentioned ranges, after the image light propagated in the light-guiding plate passes through the emission surface, the angle of diffraction thereof is within a predetermined range. As a result, the image with excellent visibility is able to reach the observer without blurring or ghosting of the image.

The line width ($L_{OUT}$), height ($H_{OUT}$), and height ($H_{OUT}$) / line width ($L_{OUT}$) of the diffractive grating pattern of the image light emission surface 20b are respectively values obtained in the same manner as the line width ($L_{IN}$), height ($H_{IN}$), and height ($H_{IN}$) / line width ($L_{IN}$) of the diffractive grating pattern of the image light incident surface 20a.

The flatness of the light-guiding plate 20 is preferably 0.5 μm or greater and 500 μm or less, more preferably 0.6 μm or greater and 450 μm or less, and yet more preferably 0.7 μm or greater and 400 μm or less.

When the flatness of the light-guiding plate 20 is within the above-mentioned range, the dimensional accuracy of the light-guiding plate of the present invention is more excellent.

The flatness of the light-guiding plate 20 is a value obtained from measurement which is performed by placing the light-guiding plate 20 on the granite surface plate with the rear surface 203 facing down and inserting a thickness gauge into the gap between the surface plate and the light-guiding plate 20.

The parallelism P of the light-guiding plate 20 is preferably 5 μm or less as described above. The flatness is more preferably 3 μm or less, yet more preferably 1.2 μm or less, especially preferably 1.0 μm or less, and most preferably 0.8 μm or less.

The glass transition temperature (Tg) of the light transmissive resin material is preferably 50°C or greater and 200°C or less, more preferably 60°C or greater and 190°C or less, and yet more preferably 70°C or greater and 180°C or less.

When the glass transition temperature (Tg) of the light transmissive resin material is within the above-mentioned range, the dimensional accuracy of the light-guiding plate of the present invention is more excellent.

The glass transition temperature (Tg) of the light transmissive resin material is a value obtained by measuring the differential scanning calorimetry using a differential scanning calorimeter (Diamond DSC, manufactured by PerkinElmer Japan Co., Ltd.).

The Charpy impact strength of the light transmissive resin material is preferably 0.5 kJ/m$^2$ or greater and 15 kJ/m$^2$ or less, more preferably 0.8 kJ/m$^2$ or greater and 14.5 kJ/m$^2$ or less, and yet more preferably 1.0 kJ/m$^2$ or greater and 14.0 kJ/m$^2$ or less.

When the Charpy impact strength of the light transmissive resin material is within the above-mentioned range, the safety of the light-guiding plate of the present invention is more excellent.

The Charpy impact strength of the light transmissive resin material is a value obtained by measuring an impact strength when a notch is provided on a test piece and the test piece is collided with a pendulum, based on JIS K7111: 2012 using a universal impact tester (manufactured by Yasuda Seiki Seisakusho Co., Ltd.).

The specific gravity of the light transmissive resin material is preferably 1.0 g/cm$^3$ or greater and 1.5 g/cm$^3$ or less, more preferably 1.05 g/cm$^3$ or greater and 1.45 g/cm$^3$ or less, and yet more preferably 1.1 g/cm$^3$ or greater and 1.4 g/cm$^3$ or less.

When the specific gravity of the light transmissive resin material is within the above-mentioned range, the lightness of the light-guiding plate of the present invention is more excellent.

The specific gravity of the light transmissive resin material is the reading value of the scale on which the test piece is floating when the test piece is put into the density gradient tube, based on JIS K7112: 1999.

The light transmittance of the light transmissive resin material is preferably 85% or greater, more preferably 86% or greater, and yet more preferably 87% or greater.

The yellowness (YI) of the light transmissive resin material is preferably 5 or less, more preferably 4 or less, and yet more preferably 3 or less.

The yellowing degree (ΔYI) of the light transmissive resin material is preferably 5 or less, more preferably 4 or less, and yet more preferably 3 or less.

When the light transmittance, yellowness (YI) and yellowing degree (ΔYI) of the light transmissive resin material are within the above-mentioned ranges, the transparency and visibility of the light-guiding plate of the present invention become more excellent.

The refractive index of the light transmissive resin material is preferably 1.2 or greater and 2.0 or less, more preferably 1.3 or greater and 1.9 or less, and yet more preferably 1.4 or greater and 1.8 or less.

When the refractive index of the light transmissive resin material is within the above-mentioned range, the visibility of the light-guiding plate of the present invention is more excellent.

The refractive index of the light transmissive resin material is a value obtained by measuring at the D line of 589 nm at 23°C, based on JIS K7142 using an Abbe refractometer.

The retardation of the light-guiding plate 20 is preferably 1 nm or greater and 200 nm or less, more preferably 3 nm or greater and 150 nm or less, and yet more preferably 4 nm or greater and 100 nm or less.

When the retardation of the light-guiding plate 20 is within the above-mentioned range, the visibility of the light-guiding plate of the present invention is more excellent.

The thickness (d) of the light-guiding plate 20 is a value obtained by measuring the thickness at four points with a micrometer at 23°C and calculating the average value thereof.

The thickness tolerance of the light-guiding plate is preferably ± 0 mm or greater and 0.2 mm or less, and preferably ± 0.001 mm or greater and 0.2 mm or less.

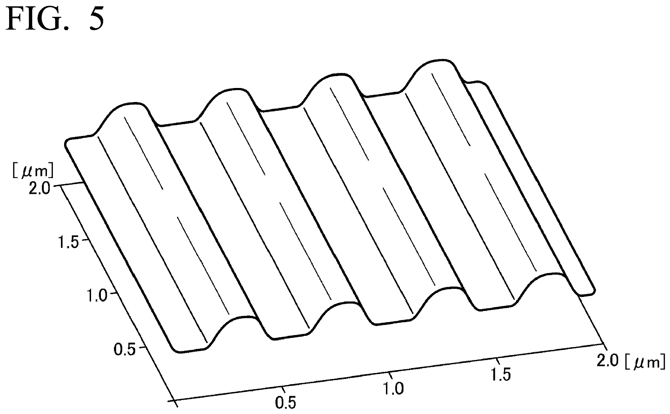

The light-guiding plate of the present invention can also be manufactured by providing, for example, a mold for injection molding, which has a diffraction pattern for forming a relief type diffractive element on the incident light side (Fig. 4) and a diffraction pattern for forming a relief type diffractive element on the emitted light side (Fig. 5), and performing injection molding using the above-mentioned light transmissive resin material.

Specifically, the following manufacturing methods (1) to (3) can be mentioned:

(1) a method of manufacturing a light-guiding plate including injecting a polymerizable raw material into a polymerized cell (injection process), curing the polymerizable raw material (curing process), and peeling a resin base from the polymerized cell (peeling process);

(2) a method of manufacturing a light-guiding plate including cutting and polishing a resin plate (cutting/polishing process); and

(3) a method of manufacturing a light-guiding plate including injection molding a resin material constituting a resin base (injection molding process) using a mold for injection molding.

In the above-mentioned injection process of the production method of (1), as a polymerized cell, it is preferable to use a polymerized cell of which the thickness of the space portion is 0.05 mm or greater and 4.0 mm or less and the thickness tolerance of the space portion is ± 0.0001 mm or greater and ± 0.2 mm or less, and it is preferable to use a polymerized cell of which the space thickness is 0.1 mm or greater and 3.8 mm or less and the thickness tolerance is ± 0.0001 mm or greater and ± 0.01 mm or less.

**EP 4 120 005 A1**

In the curing process, the polymerizable raw material can be cured by thermal polymerization, photopolymerization, or the like. In the thermal polymerization, it is preferable to polymerize at 30°C or higher and 150°C or lower for 5 minutes or longer and 120 minutes or shorter, and more preferably at 50°C or higher and 130°C or lower and 10 minutes or longer and 60 minutes or shorter. In the photopolymerization, it is preferable to perform polymerization under a condition in which the light having a wavelength of 200 nm or greater and 500 nm or less is irradiated at an irradiation intensity of 10 mWcm$^{-2}$ or greater and 1000 mWcm$^{-2}$ or less for an irradiation time of 1 second or greater and 100 seconds or less. In addition, it is preferable to perform polymerization under a condition in which the light having a wavelength of 200 nm or greater and 500 nm or less is irradiated at an irradiation intensity of 50 mWcm$^{-2}$ or greater and 500 mWcm$^{-2}$ or less for an irradiation time of 2 seconds or greater and 20 seconds or less.

In the peeling process, it is preferable to cool the polymerized cell to room temperature after the curing process and then peel the polymerized cell off.

The resin plate used in the cutting/polishing process of the manufacturing method (2) may be a commercially available product, but a continuous cast acrylic plate is particularly preferable. As the cutting method, the NC processing, grindstone processing, wrapping processing, and the like are preferable. As the polishing method, the buff polishing, chemical polishing, electrolytic polishing, chemical mechanical polishing (CMP polishing), and the like are preferable. Among the methods, the chemical mechanical polishing (CMP polishing) tends to reduce the parallelism P and the surface roughness of the resin base in a shorter time, and is particularly preferable.

The chemical mechanical polishing is a polishing method that increases the mechanical polishing (surface removal) effect using the relative movement between the polishing agent and the object to be polished due to the surface chemical action of the polishing agent (abrasive grains) and the action of the chemical components in the slurry liquid including the polishing agent.

In the chemical mechanical polishing, for example, it is possible to adopt a process of interposing a carrier to which a resin plate is attached between upper and lower surface plates to which a polishing pad is attached at a constant pressure, sending a slurry liquid including the polishing agent between the upper and lower surface plates and the carrier while rotating and revolving the carrier in a state where the temperature of the upper and lower surface plates is controlled so as to keep the temperature of 40°C or lower, and rotating the upper and lower surface plates at a constant speed at the same time.

The conditions for the chemical mechanical polishing can be appropriately selected from the conditions under which the resin base having the above-mentioned parallelism P can be obtained, and are not particularly limited. In addition, as the polishing pad and the slurry liquid, known ones can be appropriately selected and used.

In the above-mentioned injection molding process of the manufacturing method of (3), in order to improve the transferability of the diffractive optical pattern optically designed on the metal mold, it is preferable that the cylinder temperature is high, the injection speed is high, and the metal mold temperature is high, with respect to the standard molding conditions of the injection molding material. Further, in order to reduce the parallelism P, it is preferable to make the metal mold temperature distribution uniform. Furthermore, it is more preferable to perform injection compression molding.

[Examples]

Hereinafter, the present invention will be described in more detail with reference to Examples. However, the present invention is not limited to the examples described later, and various modifications can be made as long as the scope of the present invention is not changed.

[Examples and Comparative Examples of Embodiment (Examples 1 to 4 and Comparative Examples 1 and 2)]

In the following description, examples and comparative examples of the embodiments will be described.

Table 1 to be given below shows the configurations and evaluation results of the resin bases used in Examples 1 to 4 and Comparative Examples 1 and 2.

[Table 1]

| | | Resin base | | | | Evaluation | | | | | | | |
|---|---|---|---|---|---|---|---|---|---|---|---|---|---|
| | Material | Plate thickness [mm] | Manufacturing method | Product name | Refractive index | Parallelism P [μm] | Light transmittance [%] | Yellowing degree ΔYI | Retardation [nm] | Rate of dimensional change [%] | Rate of heat shrinkage [%] | Ra [nm] | Image evaluation |
| Example 1 | Acrylic resin | 1 | Cell cast (High-precision quartz) | - | 1.49 | 3.7 | 93 | 0.1 | <5 | 0.9 | 2.0 | 3.2 | A |
| Example 2 | Acrylic resin | 1 | Cell cast (High-precision quartz) | - | 1.49 | 4.9 | 93 | 0.1 | <5 | 0.9 | 2.0 | 2.3 | B |
| Example 3 | Acrylic resin | 1 | Continuous cast + Polishing | - | 1.49 | 0.5 | 93 | 0.1 | <5 | 0.9 | 2.0 | 1.7 | S |
| Example 4 | Photo-curable resin | 1 | Cell cast (High-precision quartz) + Polishing | - | 1.62 | 0.8 | 90 | 0.8 | <5 | 0.8 | 0.0 | 2.0 | S |
| Comparative Example 1 | Acrylic resin | 1 | Cell cast (Normal glass) | - | 1.49 | 30 or greater | 93 | 0.1 | <5 | 0.9 | 2.0 | 1.2 | C |
| Comparative Example 2 | Acrylic resin | 1.5 | Continuous cast | Acrylite L | 1.49 | 30 or greater | 93 | 0.1 | <5 | 0.9 | 2.0 | 4.9 | C |

High-precision quartz: a thickness of 10 mm and a plate thickness tolerance of ± 0.001 mm
Normal glass: a thickness of 6 mm and a plate thickness tolerance of ± 0.3 mm
Acrylite L is a registered trademark of Mitsubishi Chemical Corp. in Japan.

<Examples>

The following examples are just examples corresponding to the manufacture of an image display light-guiding plate.

As shown in Table 1, as the material of the resin base, acrylic resin (PMMA, refractive index 1.49) and photo-curable resin (OGSOL EA-F5710, manufactured by Osaka Gas Chemical Co., Ltd., refractive index 1.62) are used. The plate thickness of the resin base was 1 mm or 1.5 mm.

(Example 1)

The resin base of Example 1 was manufactured as follows.

100 parts of methyl methacrylate (MMA) were put into a reactor (polymerization kettle) equipped with a cooling tube, a thermometer and a stirrer, and the mixture was stirred. After bubbling with nitrogen gas, heating was started. When the internal temperature reaches 80°C, 0.05 parts of 2,2'-azobis-(2,4-dimethylvaleronitrile), which is a radical polymerization initiator, were added. After further heating to an internal temperature of 100°C, the mixture was held for 10 minutes. The reactor was then cooled to room temperature. Then, a syrup, which is a viscous mixture partially polymerized with MMA, is obtained. The polymerization rate of syrup was about 20% by mass.

Thereafter, 0.2 parts of t-hexyl peroxypivalate and 0.01 part of sodium dioctyl sulfosuccinate were added to 100 parts of the syrup and completely dissolved at room temperature to form a polymerizable raw material.

After the dissolved air in the polymerizable raw material under reduced pressure was removed, the raw material was injected into the pair of polymerized cells made of synthetic quartz glass having a mirror-finished thickness of 10 mm and a thickness tolerance of ± 0.001 mm.

The polymerized cell, into which the polymerizable raw material was injected, was held in a warm water bath at 80°C for 60 minutes and then taken out, and heated in an oven at 130°C for 30 minutes to completely cure the syrup. After the polymerized cell was cooled to room temperature, the quartz glass was peeled off to obtain the resin base.

(Example 2)

The production conditions of the resin base of Example 2 were the same as the production conditions of Example 1 except that the polymerized cell into which the polymerizable raw material was injected was held in a warm water bath at 80°C for 30 minutes.

(Example 3)

As shown in Table 1, in Example 3, Acrylite L (registered trademark), which is a continuous cast acrylic plate (polymethylmethacrylate) having a thickness of 1.5 mm equal to that of Comparative Example 2, was used in a state where the Acrylite L is processed to a thickness of 1 mm through the chemical mechanical polishing.

(Example 4)

The polymerizable raw material was prepared, in which Omnirad184 and Omnirad. TPO as the photopolymerization initiator are respectively added by one part and 0.1 part to 100 parts of Ogsol EA -F5710 (Osaka Gas Chemical Co., Ltd.) which is a photo-curable resin with a configuration unit derived from the m-phenoxy benzyl acrylate and a fluoren structure. Next, the polymerizable raw material was injected into a pair of quartz glass polymerized cells, and a high-pressure mercury lamp was photopolymerized with an illuminance of 50 mW/cm$^2$ and an exposure amount of 1000 mJ/cm$^2$. Thereby, a resin base having a thickness of 2.0 mm was obtained. Further, the resin base was processed to a thickness of 1 mm by chemical mechanical polishing.

(Comparative Example 1)

As shown in Table 1, Comparative Example 1 was the same as that of Example 1 except that tempered glass having a thickness of 6 mm and a thickness tolerance of ± 0.3 mm was used for the polymerized cell.

(Comparative Example 2)

As shown in Table 1, as the resin base in Comparative Example 2, the Acrylite L (registered trademark, manufactured by Mitsubishi Chemical Corporation), which is a continuous cast acrylic plate that has a thickness of 1.5 mm, was used.

<Evaluation Method>

Next, the evaluation methods of Examples 1 to 4 and Comparative Examples 1 and 2 will be described.

(Parallelism P)

The parallelism P of the resin base was calculated as the product of the number of interference fringes, which is measured by using a He-Ne laser having a light source wavelength of 632.8 nm, and the amount of change Δd in the thickness per one interference fringe, by using a laser Fizeau type interferometer (product name: laser interferometer G102 manufactured by Fujifilm Corp.).

The amount of change in thickness of one interference fringe Δd is a value calculated by Expression (1) as the refractive index n and the laser wavelength λ of the resin base. For example, the resin base is an acrylic resin (polymethylmethacrylate, n = 1.49), Δd is 0.212 μm.

$$\Delta d = \frac{\lambda}{2n} \qquad \cdots \quad (1)$$

As a measurement sample of the parallelism P, a flat plate-shaped resin plate that has a width of 50 mm, a length of 100 mm, and a thickness of 1.0 mm or 1.5 mm was used.

The interference pattern, which was obtained by the measurement, was recorded by a charge-shift cement device (CCD) camera and stored digitally. Next, the parallelism P was calculated from the product of Δd and the number of interference fringes per an area of 50 × 100 mm² of the measurement surface. Regarding the number of interference fringes, the number of interference fringes was set as an average value of the numbers of interference fringes which were counted in four directions from the center of the molded product to the upper, lower, left, and right ends of the molded product, on the basis of the interference image measured by the laser interferometer.

(Rate of Dimensional Change Due to Moisture Absorption)

The rate of dimensional change was calculated by immersing the test piece in distilled water at 23°C and dividing the rate of weight increase per 24 hours due to water absorption by the specific gravity of the resin material, based on JIS K 7209: 2000.

(Rate of Heat Shrinkage)

The rate of heat shrinkage was calculated by measuring the dimensional change (shrinkage) according to Annex A "Measurement of dimensional change (shrinkage) during heating" of JIS K 6718: 2015.

(Ra)

In the evaluation of Ra, an arithmetic average roughness Ra of the surface of each evaluation sample was measured. As the measurement device, a white interference type surface shape measurement machine Zygo NewView (registered trademark) 6300 (trade name; manufactured by Zygo Corp.) was used. The magnification of the objective lens was 2.5 times. The observation range was a rectangular range of 2.8 mm × 2.1 mm.

(Light Transmittance)

The total light transmittance was measured with a HAZE meter NDH-5000 (manufactured by Nippon Denshoku Kogyo Corp.). The higher the total light transmittance obtained, the more favorable the transparency.

(Yellowing Degree ΔYI)

The yellowing degree ΔYI was measured with an S&M color computer SM-T type (manufactured by Suga Test Instruments Co., Ltd.). The lower the obtained yellowing degree ΔYI value, the more favorable the transparency.

(Retardation)

A sample left at 23°C and a relative humidity of 55% for 2 hours or greater was measured for a retardation value at a wavelength of 550 nm using a birefringence measuring device KOBRA-WR (manufactured by Oji Measuring Instruments Co., Ltd.). The lower the obtained retardation value, the lower the birefringence, and the more favorable the sharpness of the display image to be described later.

(Sharpness of Display Image)

The image display light-guiding plates of Examples 1 to 4 and Comparative Examples 1 and 2 were attached to the image display device. The image display device was provided with an optical system that makes the image light to be displayed incident on the incidence portion of the image display light-guiding plate, a drive power supply, and a circuit system that supplies image information for obtaining the image light.

As the input image used for the evaluation, a white image and a character display image were used.

The evaluation was performed by visually determining the appearance of the white image and the character display image. As a character image, "ABCDE" having a size of 10 mm × 100 mm or less was displayed.

When the rainbow color is not visible in the white image and the characters are very clearly visible in the character display image, it is determined that the result is particularly favorable (very good, described as "S" in Table 1).

When the rainbow color is not visible in the white image and the characters are clearly visible in the character display image, it is determined that the result is favorable (good, described as "A" in Table 1).

When a slight rainbow color is visible in the white image but the characters are clearly visible in the character display image, it is determined that the result is acceptable (fair, described as "B" in Table 1).

When a rainbow color is visible in at least a part of the white image and the outline of the character is blurred in the character display image, it is determined that the result is unacceptable (no good, described as "C" in Table 1).

<Evaluation Result>

As shown in Table 1, the parallelisms P of Examples 1 to 4 were 3.7 $\mu$m, 4.9 $\mu$m, 0.5 $\mu$m, and 0.8 $\mu$m, respectively. In Example 2, the parallelism P was lower than that in Example 1. The reason for this is considered to be that since the holding time of the polymerized cell in Example 2 is shorter than that in Example 1, a large amount of unpolymerized syrup remains and the rapid polymerization in the next oven lowers the surface reaction uniformity. The parallelism P of Examples 1 to 4 was less than 5 $\mu$m, and the sharpness of the displayed image was excellent. On the other hand, the parallelism P of Comparative Examples 1 and 2 was greater than 30 $\mu$m in each case, and the sharpness of the displayed image was inferior.

The reason for this is considered to be that the resin base of each example was manufactured by the casting method or polishing. In the casting method, for example, the surface shape of the quartz glass used for the polymerized cell is transferred to the surface of the raw material of the resin base of each embodiment. At this time, the flatness of the surface of the resin base became equivalent to the flatness of the quartz glass. Therefore, favorable thickness accuracy of the resin base could be obtained. Moreover, through polishing, it was possible to obtain extremely high thickness accuracy of the resin base.

On the other hand, in Comparative Examples 1 and 2, it is considered that sufficient parallelism P could not be obtained because the surface shape of the tempered glass or the mold at the time of production was transferred.

The arithmetic average roughnesses Ra of Examples 1 to 4 were 3.2 nm, 2.3 nm, 1.7 nm, and 2.0 nm, respectively, and all of them were less than 10 nm. On the other hand, Ra of Comparative Examples 1 and 2 were 1.2 nm and 4.9 nm, respectively, and both were less than 10 nm. Therefore, regarding the smoothness represented by Ra, there was no significant difference between Examples 1 to 4 compared with Comparative Examples 1 and 2.

Although the preferred embodiments and examples of the present invention have been described above, the present invention is not limited to these embodiments and examples. Configurations can be added, omitted, replaced, and other modification examples without departing from the spirit of the present invention.

Further, the present invention is not limited by the above-mentioned description, but is limited only by the appended claims.

[Industrial Applicability]

The resin light-guiding plate of the present invention is able to display a clear image, and is useful for display devices such as a wearable display or a head-mounted display used for AR or MR.

[Reference Signs List]

1: Resin base
2: Hologram layer
3: Barrier layer
4: Hard coat layer
10: Image forming unit
11: Image display device
12: Projection optical system
20: Light-guiding plate
20a: Image light incident surface

20b: Image light emission surface
30a: Incident light side relief type diffractive element
30b: Emitted light side relief type diffractive element
30c: Resin base
200: Surface
201: First panel surface
202: Second panel surface
203: Rear surface
EY: Observer's eye
L1, L2, L3, L4: Light

**Claims**

1. A light-guiding plate comprising a resin base, wherein the resin base has a parallelism P of 5 $\mu$m or less per an area of 50 $\times$ 100 mm$^2$.

2. The light-guiding plate according to Claim 1, wherein a rate of dimensional change due to moisture absorption measured based on JIS K7209: 2000 is 1.0% or less.

3. The light-guiding plate according to Claim 1 or 2, wherein a rate of heat shrinkage measured based on JIS K6718-1 Annex A is 3% or less.

4. The light-guiding plate according to any one of Claims 1 to 3, wherein a thickness of the resin base is 0.05 mm or greater and 2 mm or less.

5. The light-guiding plate according to any one of Claims 1 to 4, wherein an arithmetic average roughness Ra of a surface of the resin base is 10 nm or less.

6. The light-guiding plate according to any one of Claims 1 to 5, wherein the resin base has a refractive index of 1.48 or greater.

7. The light-guiding plate according to any one of Claims 1 to 3, wherein the resin base includes at least one resin selected from the group consisting of poly(meth)acrylic resin, epoxy resin, cyclic polyolefin, and polycarbonate.

8. The light-guiding plate according to any one of Claims 1 to 7, wherein at least one surface of the resin base has a barrier layer or a hard coat layer.

9. An AR image display light-guiding plate comprising the light-guiding plate according to any one of Claims 1 to 7.

10. A use of the light-guiding plate according to any one of Claims 1 to 8 for displaying an AR image.

11. An AR display comprising the light-guiding plate according to any one of Claims 1 to 8.

FIG. 1

FIG. 2

# FIG. 3

# FIG. 4

FIG. 5

<div align="center">

**INTERNATIONAL SEARCH REPORT**

</div>

| International application No. |
|---|
| PCT/JP2021/009973 |

**A. CLASSIFICATION OF SUBJECT MATTER**
G02B 27/02(2006.01)i; G02B 5/00(2006.01)i; G02B 5/18(2006.01)i; G02B 6/00(2006.01)i; H04N 5/64(2006.01)i
FI: G02B27/02 Z; G02B5/00 Z; G02B5/18; H04N5/64 511A; G02B6/00 D
According to International Patent Classification (IPC) or to both national classification and IPC

**B. FIELDS SEARCHED**

Minimum documentation searched (classification system followed by classification symbols)
G02B27/01; G02B27/02; G02B5/00; G02B5/18; G02B6/00; H04N5/64

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/117588 A1 (LG CHEM, LTD.) 20 June 2019 (2019-06-20) claims 1-2, 11, paragraphs [0047]-[0117], fig. 1-4 | 1-11 |
| Y | US 2018/0284439 A1 (MICROSOFT TECHNOLOGY LICENSING, LLC) 04 October 2018 (2018-10-04) paragraphs [0015]-[0017] | 1-11 |
| Y | WO 2018/135193 A1 (SONY CORP.) 26 July 2018 (2018-07-26) paragraphs [0013]-[0016] | 1-11 |
| Y | JP 2011-138698 A (ZEON CORP.) 14 July 2011 (2011-07-14) paragraphs [0022]-[0023] | 2 |
| Y | JP 2004-176032 A (SEKISUI CHEMICAL CO., LTD.) 24 June 2004 (2004-06-24) paragraphs [0047], [0131] | 2 |
| Y | JP 2009-098647 A (TORAY INDUSTRIES, INC.) 07 May 2009 (2009-05-07) paragraph [0030] | 3 |

☒ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 April 2021 (30.04.2021) | 18 May 2021 (18.05.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

## INTERNATIONAL SEARCH REPORT

International application No.

PCT/JP2021/009973

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2015/125794 A1 (ASAHI GLASS CO., LTD.) 27 August 2015 (2015-08-27) paragraph [0047] | 5 |
| Y | JP 2013-063638 A (SUMITOMO CHEMICAL CO., LTD.) 11 April 2013 (2013-04-11) paragraphs [0050]-[0054] | 5 |
| Y | JP 08-094852 A (JAPAN SYNTHETIC RUBBER CO., LTD.) 12 April 1996 (1996-04-12) paragraph [0017] | 8 |
| Y | JP 2018-163252 A (DAINIPPON PRINTING CO., LTD.) 18 October 2018 (2018-10-18) paragraph [0083] | 8 |

Form PCT/ISA/210 (continuation of second sheet) (January 2015)

**INTERNATIONAL SEARCH REPORT**
Information on patent family members

| International application No. |
|---|
| PCT/JP2021/009973 |

| Patent Documents referred in the Report | Publication Date | Patent Family | Publication Date |
|---|---|---|---|
| WO 2019/117588 A1 | 20 Jun. 2019 | US 2020/0355932 A1<br>claims 1-2, 11,<br>paragraphs [0036]-<br>[0094], fig. 1-4<br>EP 3712683 A1<br>CN 111448501 A<br>KR 10-2019-0072435 A | |
| US 2018/0284439 A1 | 04 Oct. 2018 | (Family: none) | |
| WO 2018/135193 A1 | 26 Jul. 2018 | US 2019/0331921 A1<br>paragraphs [0071]-<br>[0081]<br>EP 3572863 A1 | |
| JP 2011-138698 A | 14 Jul. 2011 | (Family: none) | |
| JP 2004-176032 A | 24 Jun. 2004 | JP 4167909 B2 | |
| JP 2009-098647 A | 07 May 2009 | (Family: none) | |
| WO 2015/125794 A1 | 27 Aug. 2015 | US 2016/0349517 A1<br>paragraph [0062] | |
| JP 2013-063638 A | 11 Apr. 2013 | WO 2013/031722 A1<br>TW 201313443 A | |
| JP 08-094852 A | 12 Apr. 1996 | (Family: none) | |
| JP 2018-163252 A | 18 Oct. 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020044442 A
- JP 2020093092 A
- JP 2000296583 A
- JP 6232863 B